# EUROPEAN PATENT APPLICATION

(11) **EP 3 418 702 A1**
(43) Date of publication of application: **26.12.2018**
(21) Application number: 18176212.1
(22) Date of filing: 06.06.2018
(51) Int. Cl.: G01J 1/32, G01J 1/18, G01J 1/42

(54) **METHOD FOR ADJUSTING COLOR TEMPERATURE BASED ON RGB OPTICAL SPECTRAL ENERGY RECONSTRUCTION, NON-TRANSITORY COMPUTER-READABLE STORAGE MEDIUM AND TERMINAL DEVICE**

(30) Priority: 19.06.2017 CN 201710467278
(71) Applicant: Guangdong OPPO Mobile Telecommunications Corp., Ltd., Guangdong 523860 (CN)
(72) Inventor: CHEN, Yongxing, Dongguan, Guangdong 523860 (CN)
(74) Representative: advotec.

(57) **Abstract**

A method for adjusting color temperature based on RGB optical spectral energy reconstruction, a non-temporary computer readable storage medium and a terminal device (1000) are provided. The method includes: detecting (S110) RGB optical spectral energy of a screen in an initial state; determining (S120) a reconstruction proportion of the RGB optical spectral energy corresponding to a proportion of blue light to be filtered and a target color temperature to be met according to pre-learned RGB optical spectral energy distribution information; and adjusting (S130) the RGB optical spectral energy according to the reconstruction proportion, so as to enable the RGB optical spectral energy of the screen subjected to a blue light filtering operation to meet the target color temperature.

## Description

### FIELD

The present disclosure relates to screen display technologies, and more particularly to a method for adjusting color temperature based on RGB optical spectral energy reconstruction, non-temporary computer readable storage medium, and a terminal device.

### BACKGROUND

At present, a screen of a terminal device typically presents different colors by overlaying three colors of red color, green color and blue color. The blue color refers to short-wavelength blue light, which may cause eye diseases such as maculopathy etc. Thus, most manufacturers would like to protect eyes from disease by blue light filtering.

### DISCLOSURE

The present disclosure is related to a method for adjusting color temperature based on RGB optical spectral energy reconstruction, a terminal device and a non-temporary computer readable storage medium.

Embodiments of the present disclosure provide a method for adjusting color temperature based on RGB optical spectral energy reconstruction, including: detecting RGB optical spectral energy of a screen in an initial state; determining a reconstruction proportion of the RGB optical spectral energy corresponding to a proportion of blue light to be filtered and a target color temperature to be met according to pre-learned RGB optical spectral energy distribution information; and adjusting the RGB optical spectral energy according to the reconstruction proportion, so as to make the RGB optical spectral energy of the screen subjected to a blue light filtering operation meet the target color temperature.

In an embodiment, the method further includes: pre-learning different RGB optical spectral energy distribution statuses corresponding respectively to different color temperatures to acquire the pre-learned RGB optical spectral energy distribution information.

In an embodiment, pre-learning different RGB optical spectral energy distribution statuses corresponding respectively to different color temperatures to acquire the pre-learned RGB optical spectral energy distribution information includes: performing the blue light filtering operation on the screen and acquiring a proportion of filtered blue light; adjusting the RGB optical spectral energy of the screen in the initial state according to a predetermined color temperature until the predetermined color temperature is met; and recording test data in the RGB optical spectral energy distribution information, wherein the test data comprises: a correspondence between the proportion of filtered blue light, the predetermined color temperature and a reconstruction proportion of the RGB optical spectral energy.

In an embodiment, pre-learning different RGB optical spectral energy distribution statuses corresponding respectively to different color temperatures to acquire the pre-learned RGB optical spectral energy distribution information includes: presenting a plurality of color temperatures to a user for a proportion of filtered blue light; receiving evaluation information fed back by the user to the plurality of color temperatures; determining a first color temperature with positive evaluation information and a proportion of the RGB optical spectral energy presented together with the first color temperature; and recording test data in the RGB optical spectral energy distribution information, wherein the test data comprises: a correspondence between the proportion of filtered blue light, the first color temperature and the proportion of the RGB optical spectral energy.

In an embodiment, adjusting the RGB optical spectral energy according to the reconstruction proportion, so as to make the RGB optical spectral energy of the screen subjected to a blue light filtering operation meet the target color temperature includes: performing, by a plurality of first energy adjusting modules corresponding respectively to blue light, green light and red light, an initial adjustment on the RGB optical spectral energy according to the reconstruction proportion; and performing, by a plurality of second energy adjusting modules corresponding respectively to blue light, green light and red light, a further adjustment on the RGB optical spectral energy initially adjusted by the plurality of first energy adjusting modules, so as to make the RGB optical spectral energy of the screen subjected to the blue light filtering operation meet the target color temperature.

In an embodiment, adjusting the RGB optical spectral energy according to the reconstruction proportion, so as to make the RGB optical spectral energy of the screen subjected to a blue light filtering operation meet the target color temperature includes: adjusting, by a plurality of third energy adjusting modules corresponding respectively to blue light, green light and red light, the RGB optical spectral energy of the screen according to the reconstruction proportion, so as to make the RGB optical spectral energy of the screen subjected to the blue light filtering operation meet the target color temperature.

In an embodiment, adjusting the RGB optical spectral energy according to the reconstruction proportion, so as to make the RGB optical spectral energy of the screen subjected to a blue light filtering operation meet the target color temperature includes: adjusting, by a plurality of third energy adjusting modules corresponding respectively to blue light, green light and red light, the RGB optical spectral energy of the screen in the initial state; acquiring a current color temperature according to the adjusted RGB optical spectral energy of the screen and determining whether the current color temperature meets the predetermined color temperature; and when the current color temperature does not meet the predetermined color temperature, continuing adjusting the adjusted RGB optical spectral energy until the predetermined color temperature is met.

In an embodiment, each of the plurality of first energy adjusting modules and the plurality of second energy adjusting modules is selected from a group including: an energy adjustor, and an energy adjusting program .

In an embodiment, each of the plurality of third energy adjusting modules is selected from a group including: an energy adjustor, and an energy adjusting program .

Embodiments of the present disclosure provide a non-transitory computer readable storage medium having a computer program stored thereon. When t the computer program is executed by a device, the device is caused to perform the method for adjusting color temperature based on RGB optical spectral energy reconstruction as mentioned above.

Embodiments of the present disclosure provide a terminal device, including a memory, a processor and a computer program stored on the memory and executable on the processor. When the processor executes the computer program, the terminal device is caused to perform the method for adjusting color temperature based on RGB optical spectral energy reconstruction as mentioned above.

### BRIEF DESCRIPTION OF THE DRAWINGS

These and other aspects and advantages of embodiments of the present disclosure will become apparent and more readily appreciated from the following descriptions made with reference to the drawings.
Fig. 1 is a schematic diagram illustrating a change in color of a screen due to a change in a proportion of RGB energy according to an embodiment of the present disclosure.
Fig. 2 is a flow chart of a method for adjusting color temperature based on RGB optical spectral energy reconstruction according to an embodiment of the present disclosure.
Fig. 3 is a schematic diagram illustrating a relationship between a change in color and a change in a proportion of RGB energy according to an embodiment of the present disclosure.
Fig. 4 is a schematic diagram illustrating curves of RGB optical spectral energy distribution according to an embodiment of the present disclosure.
Fig. 5 is a flow chart of a method for adjusting color temperature based on RGB optical spectral energy reconstruction according to a specific embodiment of the present disclosure.
Fig. 6 is a block diagram of an apparatus for adjusting color temperature based on RGB optical spectral energy reconstruction according to an embodiment of the present disclosure.
Fig. 7 is a block diagram of an apparatus for adjusting color temperature based on RGB optical spectral energy reconstruction according to another embodiment of the present disclosure.
Fig. 8 is a block diagram of an apparatus for adjusting color temperature based on RGB optical spectral energy reconstruction according to a further embodiment of the present disclosure.
Fig. 9 is a block diagram of a terminal device according to an embodiment of the present disclosure.

### EMBODIMENTS OF THE PRESENT DISCLOSURE

Reference will now be made in detail to exemplary embodiments, examples of which are illustrated in the accompanying drawings, in which the same or similar reference numbers throughout the drawings represent the same or similar elements or elements having same or similar functions. Embodiments described below with reference to drawings are merely exemplary and used for explaining the present disclosure, and should not be understood as limitation to the present disclosure.

A method for adjusting color temperature based on RGB optical spectral energy reconstruction, an apparatus for adjusting color temperature based on RGB optical spectral energy reconstruction, and a terminal device according to embodiments of the present disclosure will be described below with reference to accompanying drawings.

After a part of blue light is filtered, the proportion of RGB changes, such that the color temperature of the screen may change obviously, thus leading to a change in color of the screen. Thus, how to change the color naturally to provide a good visual experience for the user is an urgent problem to be solved.

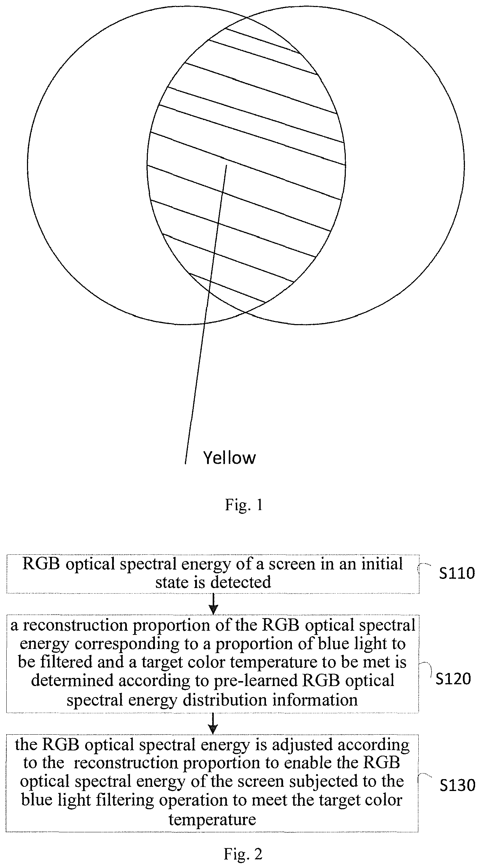

After a blue light filter operation is performed, since a proportion of RGB energy changes, a color of a screen changes after the screen is subjected to the blue light filtering operation. For example, as illustrated in Fig. 1, when blue light (B) is filtered out, only red light and green light (R+G) is left, such that the color of the screen will be yellow. Since the color of the screen suddenly changes to yellow, uncomfortable visual experience is caused to vision of a user and the color of the screen becomes unnatural.

In order to solve the above technical problems, the present disclosure provides a method for adjusting color temperature based on RGB optical spectral energy reconstruction, which may realize both blue light filtering and good visual effect related to the color of the screen, so as to ensure that the color of the screen changes naturally after the blue light filtering.

In the following, the method for adjusting color temperature based on RGB optical spectral energy reconstruction provided by the present disclosure will be described in combination with specific embodiments. An execution subject of the method for adjusting color temperature based on RGB optical spectral energy reconstruction provided by the present disclosure refers to an apparatus for adjusting color temperature based on RGB optical spectral energy reconstruction. The apparatus for adjusting color temperature based on RGB optical spectral energy reconstruction may be a terminal device having a display screen, such as a mobile phone, a computer, a PAD, a wearable device or the like, which may be selected according to application requirements.

Fig. 2 illustrates a flow chart of a method for adjusting color temperature based on RGB optical spectral energy reconstruction according to an embodiment of the present disclosure.

As illustrated in Fig. 2, the method includes the followings.

At block S I 10, RGB optical spectral energy of a screen in an initial state is detected.

In different application scenarios, there may be different distribution statuses for the RGB optical spectral energy when the screen is in the initial state. In some application scenarios, the initial state of the screen corresponds to a state in which no operation causing the change in color is performed, such as a white screen state (optical spectral energy for red light, greed light and blue light (RGB) evenly distributes) when the terminal device is just manufactured. In some application scenarios, once the terminal device is used, the color temperature of the terminal device may be adjusted accordingly to adapt to current environment. In this case, the initial state of the screen corresponds to a state in which the color temperature of the screen is adjusted according to common environment conditions (for example in an office where the user generally performs activities).

In some embodiments, the RGB optical spectral energy of the screen in the initial state is detected, for example, a curve of RGB optical spectral energy distribution of the screen in the initial state is detected through a color analyzer CA-310, such that the RGB optical spectral energy of the screen in the initial state can be used as a reference value for adjusting RGB energy distribution subsequently.

At block S120, a reconstruction proportion of the RGB optical spectral energy corresponding to a proportion of blue light to be filtered and a target color temperature to be met is determined according to pre-learned RGB optical spectral energy distribution information.

Different RGB optical spectral energy distribution statuses corresponding respectively to different color temperatures can be learned in advance. For example, when the color temperature is 2000K, the RGB optical spectral energy distribution status in which the color of the screen is comfortable is learned in advance. When the color temperature is 3000K, the RGB optical spectral energy distribution status in which the color of the screen is comfortable is learned in advance, and so on.

In different application scenarios, different methods can be used to learn the RGB optical spectral energy distribution information, which will be described below.

### First instance

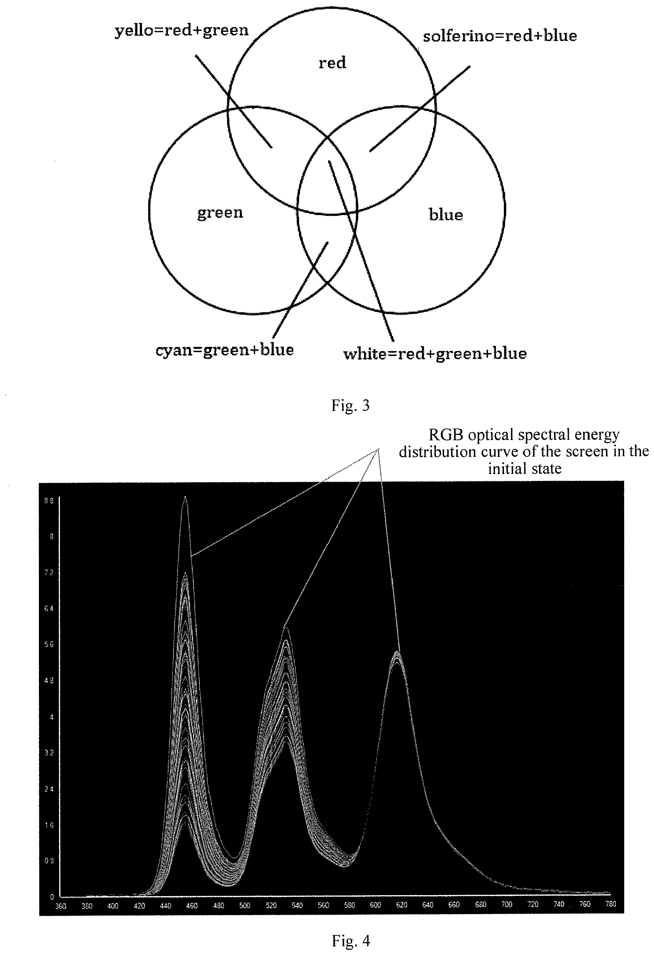

The blue light filtering operation is performed on the screen, a proportion of filtered blue light is obtained, and the RGB optical spectral energy of the screen in the initial state is adjusted according to a predetermined color temperature until the predetermined color temperature is met. Referring to Fig. 3, when different colors of RGB are overlaid, different colors may be formed. As illustrated in Fig. 3, a combination of green color and blue color may present cyan color. A combination of red color and green color may present yellow color. The RGB optical spectral energy of the screen in the initial state is adjusted by energy adjusting modules corresponding respectively to the blue light, green light and red light. The current color temperature is obtained according to the adjusted RGB optical spectral energy of the screen, and it is determined whether the current color temperature meets the predetermined color temperature. If the current color temperature does not meet the predetermined color temperature, the RGB optical spectral energy is adjusted continually until the predetermined color temperature is met.

In an actual execution, as the vision and preference of the user change, the previously learned RGB optical spectral energy distribution information may not adapt to a current visual requirement of the user. In this case, the currently adjusted RGB optical spectral energy distribution status in which the user feels the color temperature is comfortable is recorded and leaned, such that the pre-learned RGB optical spectral distribution information may adapt to personalized requirements of the user, thus further improving user experience.

The test data recorded in the RGB optical spectral distribution information may include a correspondence between the proportion of filtered blue light, the predetermined color temperature and a reconstruction proportion of the RGB optical spectral energy.

For example, after the blue light filtering operation is performed on the screen, the proportion of filtered blue light is obtained as a, and the predetermined color temperature providing the user with a good visual experience is set as 3000K for this proportion of filtered blue light, in this case, the RGB optical spectral energy of the screen in the initial state is adjusted according to the predetermined color temperature. The adjusted RGB optical spectral energy distribution and a comparison of a curve of the adjusted RGB optical spectral energy distribution to a curve of the RGB optical spectral energy distribution of the screen in the initial state can be obtained from the curves of RGB optical spectral energy distribution illustrated in Fig. 4. In Fig. 4, in addition to the curve of RGB optical spectral energy distribution of the screen in the initial state which is indicated, other curves refer to RGB optical spectral distribution corresponding to different predetermined color temperatures. When the RGB optical spectral energy is adjusted to meet the color temperature of 3000K, the proportion of filtered blue light, the predetermined color temperature and the reconstruction proportion of the RGB optical spectral energy are recorded in the RGB optical spectral distribution information.

### Second instance

Different color temperatures corresponding to each proportion of filtered blue light may be presented to the user, and evaluation information that the user feeds back to the different color temperatures is received. For each proportion of filtered blue light, the highest rated color temperature can be configured as the color temperature providing the user with a best visual experience for the proportion of filtered blue light, and further the reconstruction proportion of the RGB optical spectral energy corresponding to the color temperature providing the user with the best visual experience is recorded.

The reconstruction proportion of the RGB optical spectral energy corresponding to the proportion of blue light to be filtered and the target color temperature to be met can be determined according to the pre-learned RGB optical spectral energy distribution information. The target color temperature may be the color temperature providing the user with the most comfortable visual experience for the proportion of blue light to be filtered that is specified according to lots of experimental data.

At block S130, the RGB optical spectral energy is adjusted according to the reconstruction proportion to enable the RGB optical spectral energy of the screen subjected to the blue light filtering operation to meet the target color temperature.

In some embodiments, the RGB optical spectral energy is adjusted according to the reconstruction proportion, to ensure that the RGB optical spectral energy of the screen subjected to the blue light filtering operation meets the target color temperature and that the blue light is filtered out.

In different application scenarios, different ways may be adopted to adjust the RGB optical spectral energy according to the reconstruction proportion, to ensure that the RGB optical spectral energy of the screen subjected to the blue light filtering operation meets the target color temperature.

As a possible embodiment, a rough adjustment and a refine adjustment are performed on the RGB optical spectral energy.

In this embodiment, an initial adjustment is performed on the RGB optical spectral energy by a plurality of first energy adjusting modules corresponding respectively to blue light, green light and red light according to the reconstruction proportion. A corrected adjustment is performed, by a plurality of second energy adjusting modules corresponding respectively to blue light, green light and red light, on the RGB optical spectral energy adjusted by the plurality of first energy adjusting modules, so as to enable the RGB optical spectral energy of the screen subjected to the blue light operation to meet the target color temperature.

For example, after determining the reconstruction proportion as a reconstruction proportion corresponding to the color temperature of 2570 K, in order to relief pressure of adjustment, the color temperature is firstly adjusted to the reconstruction proportion corresponding to the color temperature of 2500 K and further the proportion of the RGB optical spectral energy is adjusted to make the color temperature reach 2570 K.

The adjustment procedure including the rough adjustment and refine adjustment may be repeatedly executed many times, until the target color temperature is met.

As another embodiment, the RGB optical spectral energy is directly adjusted according to the calculated reconstruction proportion of the RGB optical spectral energy, in which skilful operational experience and energy adjusting modules each having high performance are required.

In this embodiment, according to the reconstruction proportion of the RGB optical spectral energy, the RGB optical spectral energy is adjusted by the energy adjusting modules corresponding respectively to blue light, green light and red light, to ensure that the RGB optical spectral energy of the screen subjected to the blue light filtering operation meets the target color temperature.

The above energy adjusting modules may be energy adjustors, or energy adjusting programs able to realize the RGB optical spectral energy adjustment, which will be not limited herein.

In order to make those skilled understand the present disclosure better, the execution procedure of the method for adjusting color temperature based on RGB optical spectral energy will be described below in combination with a specific application scenario.

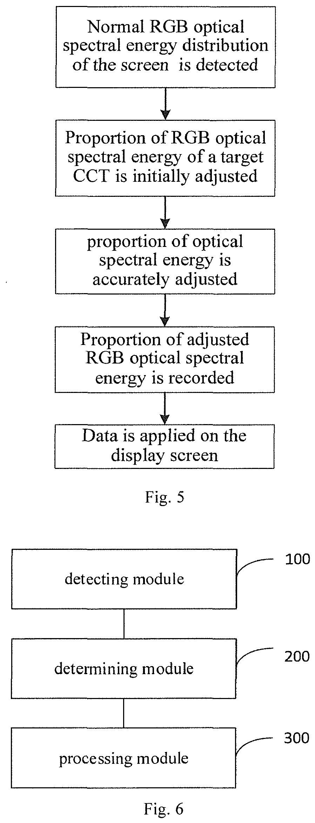

As illustrated in Fig. 5, the curve of RGB optical spectral energy distribution of the screen in the initial state is detected, and the reconstruction proportion of RGB optical spectral energy corresponding to the proportion of blue light to be filtered and the target color temperature to be met is determined according to the pre-learned curve of the RGB optical spectral energy distribution. The initial adjustment is performed on the proportion of the RGB energy by an application apk able to adjust the color temperature according to the determined reconstruction proportion. After the initial adjustment, a refine adjustment is performed on the proportion of the RGB energy by an application apk able to adjust the color temperature, so as to meet the target color temperature. The screen is controlled to display based on the target color temperature. In this way, the RGB optical spectral energy is reconstructed, such that not only a part of blue light can be filtered out, but also the color of the screen may become more comfortable and natural compared to only filtering out blue light, such that visual fatigue can be relieved, the brain may completely relax, which is contribute to enhance the immunologic function, reagency, retention and coordinate ability, and to reduce possibility of diabetes mellitus, heart disease, cancer, obesity, dyspepsia, constipation, tristimania or the like.

In conclusion, with the method for adjusting color temperature based on RGB optical spectral energy reconstruction, RGB optical spectral energy of a screen in an initial state is detected, a reconstruction proportion of the RGB optical spectral energy corresponding to a proportion of blue light to be filtered and a target color temperature to be met is determined according to pre-learned RGB optical spectral energy distribution information, and the RGB optical spectral energy is adjusted according to the reconstruction proportion, to enable the RGB optical energy of the screen subjected to a blue light filtering operation to meet the target color temperature. In this way, harm of blue light can be reduced, while more comfortable and nature color temperature and color change can be provided, thus not only facilitating to secrete melatonin of human body to lower vitality of human body and make the human relax but also providing a better visual experience for the user.

In order to achieve the above objectives, the present disclosure further provides an apparatus for adjusting color temperature based on RGB optical spectral energy reconstruction.

Fig. 6 illustrates a block diagram of an apparatus for adjusting color temperature based on RGB optical spectral energy reconstruction according to an embodiment of the present disclosure.

As illustrated in Fig.6, the apparatus includes a detecting module 100, a determining module 200 and a processing module 300.

The detecting module 100 is configured to detect RGB optical spectral energy of a screen in an initial state.

The determining module 200 is configured to determine a reconstruction proportion of the RGB optical spectral energy corresponding to a proportion of blue light to be filtered and a target color temperature to be met according to pre-learned RGB optical spectral energy distribution information.

The processing module 300 is configured to adjust the RGB optical spectral energy according to the reconstruction proportion, so as to enable the RGB optical spectral energy of the screen subjected to a blue light filtering operation to meet the target color temperature.

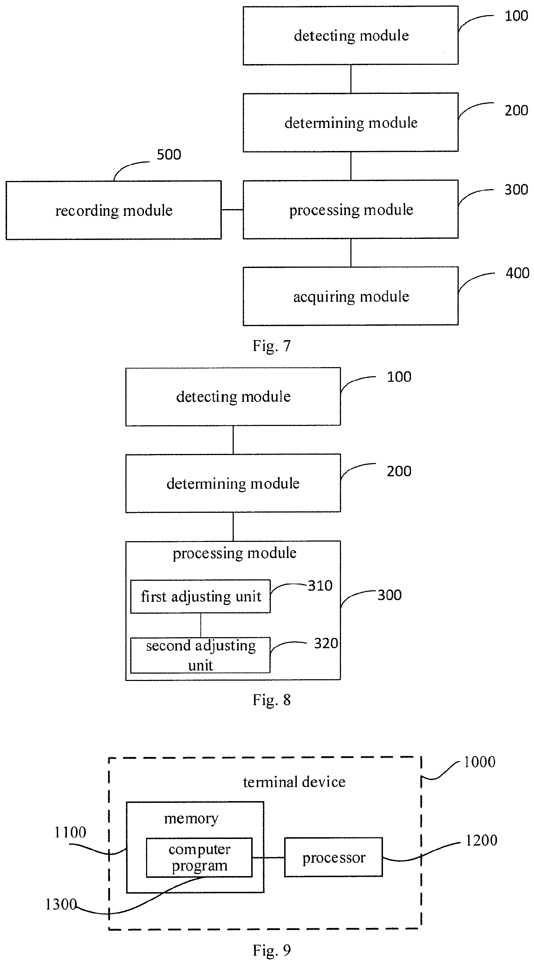

In an embodiment of the present disclosure, as illustrated in Fig. 7, on the basis of the embodiment described with regard to Fig. 6, the apparatus further includes an acquiring module 400 and a recording module 500.

The acquiring module 400 is configured to perform the blue light filtering operation on the screen and to acquire a proportion of filtered blue light before determining the reconstruction proportion corresponding to the proportion of blue light to be filtered and the target color temperature to be met according to the pre-learned RGB optical spectral energy distribution information.

In an embodiment, the processing module 300 is further configured to adjust the RGB optical spectral energy of the screen in the initial state according to a predetermined color temperature until the predetermined color temperature is met.

The recording module 500 is configured to record test data in the RGB optical spectral energy distribution information. The test data includes a correspondence between the proportion of filtered blue light, the predetermined color temperature and a reconstruction proportion of the RGB optical spectral energy.

In an embodiment of the present disclosure, as illustrated in Fig. 8, on the basis of the embodiment described with regard to Fig. 6, the processing module 300 includes a first adjusting unit 310 and a second adjusting unit 320.

The first adjusting unit 310 is configured to perform by a plurality of first energy adjusting modules corresponding respectively to blue light, green light and red light according to the reconstruction proportion, an initial adjustment on the RGB optical spectral energy.

The second adjusting unit 320 is configured to perform, by a plurality of second energy adjusting modules corresponding respectively to blue light, green light and red light, a further adjustment on the RGB optical spectral energy adjusted by the plurality of first energy adjusting modules, so as to make the RGB optical spectral energy of the screen subjected to the blue light filtering operation meet the target color temperature.

The description of the method for adjusting color temperature based on RGB optical spectral energy reconstruction mentioned above is also suitable to the apparatus for adjusting color temperature based on RGB optical spectral energy reconstruction, and the principles are the same, which will not be described herein.

In conclusion, with the apparatus for adjusting color temperature based on RGB optical spectral energy reconstruction, RGB optical spectral energy of a screen in an initial state is detected, a reconstruction proportion of the RGB optical spectral energy corresponding to a proportion of blue light to be filtered and a target color temperature to be met is determined according to pre-learned RGB optical spectral energy distribution information, and the RGB optical spectral energy is adjusted according to the reconstruction proportion, to enable the RGB optical energy of the screen subjected to a blue light filtering operation to meet the target color temperature. In this way, harm of blue light can be reduced, while more comfortable and nature color temperature and color change can be provided, thus not only facilitating to secrete melatonin of human body to lower vitality of human body and make the human relax but also providing a better visual experience for the user.

In order to achieve the above embodiments, the present disclosure further provides a terminal device. Fig. 9 illustrates a block diagram of a terminal device according to an embodiment of the present disclosure. As illustrated in Fig. 9, the terminal device 1000 may include a memory 1100, a processor 1200, and a computer program 1300 stored on the memory 1000 and executable on the processor 1200. The processor 1200 executes the computer program 1300, the method for adjusting color temperature based on RGB optical spectral energy reconstruction mentioned above can be realized.

In conclusion, with the terminal device, RGB optical spectral energy of a screen in an initial state is detected, a reconstruction proportion of the RGB optical spectral energy corresponding to a proportion of blue light to be filtered and a target color temperature to be met is determined according to pre-learned RGB optical spectral energy distribution information, and the RGB optical spectral energy is adjusted according to the reconstruction proportion, to enable the RGB optical energy of the screen subjected to a blue light filtering operation to meet the target color temperature. In this way, harm of blue light can be reduced, while more comfortable and nature color temperature and color change can be provided, thus not only facilitating to secrete melatonin of human body to lower vitality of human body and make the human relax but also providing a better visual experience for the user.

In order to achieve the above embodiments, the present disclosure further provides a non-temporary computer readable storage medium having a computer program stored thereon. When the computer program is executed by a processor, the method for adjusting color temperature based on RGB optical spectral energy reconstruction mentioned above can be realized.

Reference throughout this specification to "an embodiment," "some embodiments," "an example," "a specific example," or "some examples," means that a particular feature, structure, material, or characteristic described in connection with the embodiment or example is included in at least one embodiment or example of the present disclosure. In this specification, exemplary descriptions of aforesaid terms are not necessarily referring to the same embodiment or example. Furthermore, the particular features, structures, materials, or characteristics may be combined in any suitable manner in one or more embodiments or examples. Moreover, those skilled in the art could combine different embodiments or different characteristics in embodiments or examples described in the present disclosure.

Moreover, terms of "first" and "second" are only used for description and cannot be seen as indicating or implying relative importance or indicating or implying the number of the indicated technical features. Thus, the features defined with "first" and "second" may comprise or imply at least one of these features. In the description of the present disclosure, "a plurality of' means two or more than two, unless specified otherwise.

Any process or method described in a flow chart or described herein in other ways may be understood to include one or more modules, segments or portions of codes of executable instructions for achieving specific logical functions or steps in the process, and the scope of a preferred embodiment of the present disclosure includes other implementations, wherein the order of execution may differ from that which is depicted or discussed, including according to involved function, executing concurrently or with partial concurrence or in the contrary order to perform the function, which should be understood by those skilled in the art.

The logic and/or step described in other manners herein or shown in the flow chart, for example, a particular sequence table of executable instructions for realizing the logical function, may be specifically achieved in any computer readable medium to be used by the instruction execution system, device or equipment (such as the system based on computers, the system comprising processors or other systems capable of acquiring the instruction from the instruction execution system, device and equipment and executing the instruction), or to be used in combination with the instruction execution system, device and equipment. As to the specification, "the computer readable medium" may be any device adaptive for including, storing, communicating, propagating or transferring programs to be used by or in combination with the instruction execution system, device or equipment. More specific examples of the computer-readable medium comprise but are not limited to: an electronic connection (an electronic device) with one or more wires, a portable computer enclosure (a magnetic device), a random access memory (RAM), a read-only memory (ROM), an erasable programmable read-only memory (EPROM or a flash memory), an optical fiber device and a portable compact disk read-only memory (CDROM). In addition, the computer-readable medium may even be a paper or other appropriate medium capable of printing programs thereon, this is because, for example, the paper or other appropriate medium may be optically scanned and then edited, decrypted or processed with other appropriate methods when necessary to obtain the programs in an electric manner, and then the programs may be stored in the computer memories.

It should be understood that each part of the present disclosure may be realized by hardware, software, firmware or their combination. In the above embodiments, a plurality of steps or methods may be realized by the software or firmware stored in the memory and executed by the appropriate instruction execution system. For example, if it is realized by the hardware, likewise in another embodiment, the steps or methods may be realized by one or a combination of the following techniques known in the art: a discrete logic circuit having a logic gate circuit for realizing a logic function of a data signal, an application-specific integrated circuit having an appropriate combination logic gate circuit, a programmable gate array (PGA), a field programmable gate array (FPGA), etc..

Those skilled in the art shall understand that all or parts of the steps in the above exemplifying method for the present disclosure may be achieved by commanding the related hardware with programs, the programs may be stored in a computer-readable storage medium, and the programs comprise one or a combination of the steps in the method embodiments of the present disclosure when running on a computer.

In addition, each function cell of the embodiments of the present disclosure may be integrated in a processing module, or these cells may be separate physical existence, or two or more cells are integrated in a processing module. The integrated module may be realized in a form of hardware or in a form of software function modules. When the integrated module is realized in a form of software function module and is sold or used as a standalone product, the integrated module may be stored in a computer-readable storage medium.

The storage medium mentioned above may be read-only memories, magnetic disks, CD, etc.

## Claims

1. A method for adjusting color temperature based on RGB optical spectral energy reconstruction, comprising:
detecting (S110) RGB optical spectral energy of a screen in an initial state;
determining (S120) a reconstruction proportion of the RGB optical spectral energy corresponding to a proportion of blue light to be filtered and a target color temperature to be met according to pre-learned RGB optical spectral energy distribution information; and
adjusting (S130) the RGB optical spectral energy according to the reconstruction proportion, so as to make the RGB optical spectral energy of the screen subjected to a blue light filtering operation meet the target color temperature.

2. The method according to claim 1, wherein the method further comprises:
pre-learning different RGB optical spectral energy distribution statuses corresponding respectively to different color temperatures to acquire the pre-learned RGB optical spectral energy distribution information.

3. The method according to claim 2, wherein pre-learning different RGB optical spectral energy distribution statuses corresponding respectively to different color temperatures to acquire the pre-learned RGB optical spectral energy distribution information comprises:
performing the blue light filtering operation on the screen and acquiring a proportion of filtered blue light;
adjusting the RGB optical spectral energy of the screen in the initial state according to a predetermined color temperature until the predetermined color temperature is met; and
recording test data in the RGB optical spectral energy distribution information, wherein the test data comprises: a correspondence between the proportion of filtered blue light, the predetermined color temperature and a reconstruction proportion of the RGB optical spectral energy.

4. The method according to claim 2, wherein pre-learning different RGB optical spectral energy distribution statuses corresponding respectively to different color temperatures to acquire the pre-learned RGB optical spectral energy distribution information comprises:
presenting a plurality of color temperatures to a user for a proportion of filtered blue light;
receiving evaluation information fed back by the user to the plurality of color temperatures;
determining a first color temperature with positive evaluation information and a proportion of the RGB optical spectral energy presented together with the first color temperature; and
recording test data in the RGB optical spectral energy distribution information, wherein the test data comprises: a correspondence between the proportion of filtered blue light, the first color temperature and the proportion of the RGB optical spectral energy.

5. The method according to any of claims 1-4, wherein adjusting (S130) the RGB optical spectral energy according to the reconstruction proportion, so as to make the RGB optical spectral energy of the screen subjected to a blue light filtering operation meet the target color temperature comprises:
performing, by a plurality of first energy adjusting modules corresponding respectively to blue light, green light and red light, an initial adjustment on the RGB optical spectral energy according to the reconstruction proportion; and
performing, by a plurality of second energy adjusting modules corresponding respectively to blue light, green light and red light, a further adjustment on the RGB optical spectral energy initially adjusted by the plurality of first energy adjusting modules, so as to make the RGB optical spectral energy of the screen subjected to the blue light filtering operation meet the target color temperature.

6. The method according to any of claims 1-4, wherein adjusting (S130) the RGB optical spectral energy according to the reconstruction proportion, so as to make the RGB optical spectral energy of the screen subjected to a blue light filtering operation meet the target color temperature comprises:
adjusting, by a plurality of third energy adjusting modules corresponding respectively to blue light, green light and red light, the RGB optical spectral energy of the screen according to the reconstruction proportion, so as to make the RGB optical spectral energy of the screen subjected to the blue light filtering operation meet the target color temperature.

7. The method according to any of claims 1-4, wherein adjusting (S130) the RGB optical spectral energy according to the reconstruction proportion, so as to make the RGB optical spectral energy of the screen subjected to a blue light filtering operation meet the target color temperature comprises:
adjusting, by a plurality of third energy adjusting modules corresponding respectively to blue light, green light and red light, the RGB optical spectral energy of the screen in the initial state;
acquiring a current color temperature according to the adjusted RGB optical spectral energy of the screen and determining whether the current color temperature meets the predetermined color temperature; and
when the current color temperature does not meet the predetermined color temperature, continuing adjusting the adjusted RGB optical spectral energy until the predetermined color temperature is met.

8. The method according to claim 5, wherein each of the plurality of first energy adjusting modules and the plurality of second energy adjusting modules is selected from a group comprising:
an energy adjustor, and an energy adjusting program .

9. The method according to claim 7, wherein each of the plurality of third energy adjusting modules is selected from a group comprising:
an energy adjustor, and an energy adjusting program .

10. A non-transitory computer-readable medium, having a computer program stored thereon, wherein when the computer program is executed by a device, the device is caused to perform the method according to any of claims 1-9.

11. A terminal device (1000), comprising a memory (1100), a processor (1200), and a computer program (1300) stored on the memory (1100) and executable on the processor (1200), wherein when the processor (1200) executes the computer program (1300), the terminal device (1000) is caused to perform the method according to any of claims 1-9.
